# EUROPÄISCHE PATENTSCHRIFT

(11) **EP 2 101 896 B1**
(45) Veröffentlichungstag und Bekanntmachung des Hinweises auf die Patenterteilung: **28.09.2011**
(21) Anmeldenummer: 06762745.5
(22) Anmeldetag: 21.07.2006
(51) Int. Cl.: F01N 3/20, F01N 9/00, B01D 53/90, B01D 53/94

(54) **VERFAHREN ZUR SELEKTIVEN KATALYTISCHEN REDUKTION VON STICKOXIDEN IM ABGAS EINER VERBRENNUNGSKRAFTMASCHINE UND ABGASSYSTEM**
METHOD FOR THE SELECTIVE CATALYTIC REDUCTION OF NITROGEN OXIDES IN THE EXHAUST GAS OF AN INTERNAL COMBUSTION ENGINE AND EXHAUST GAS SYSTEM
PROCEDE DE REDUCTION CATALYTIQUE SELECTIVE D'OXYDES D'AZOTE DANS LES GAZ D'ECHAPPEMENT D'UN MOTEUR A COMBUSTION INTERNE ET SYSTEME D'ECHAPPEMENT

(30) Priorität: 29.07.2005 DE 102005035554
(43) Veröffentlichungstag der Anmeldung: 23.09.2009
(73) Patentinhaber: Emitec Gesellschaft für Emissionstechnologie mbH, 53797 Lohmar (DE)
(72) Erfinder: BRÜCK, Rolf, 51429 Bergisch Gladbach (DE)
(74) Vertreter: Rössler, Matthias
(86) Internationale Anmeldenummer: PCT/EP2006/007196
(87) Internationale Veröffentlichungsnummer: WO 2007/014649

(56) Entgegenhaltungen:
- EP-A- 1 469 173
- EP-A1- 1 338 562
- US-A- 5 785 937
- US-A1- 2003 209 011

## Beschreibung

Gegenstand der vorliegenden Erfindung ist ein Verfahren zur selektiven katalytischen Reduktion von Stickoxiden im Abgas einer Verbrennungskraftmaschine insbesondere im Abgassystem von Kraftfahrzeugen und ein entsprechendes Abgassystem. Die Erfindung beschäftigt sich insbesondere mit der Regelung der Zugabe eines Reduktionsmittels oder eines Reduktionsmittelvorläufers in das Abgas.

Weltweit sind in vielen Staaten gesetzliche Regelungen getroffen worden, die einen oberen Grenzwert für den Gehalt von bestimmten Substanzen im Abgas von Verbrennungskraftmaschinen festlegen. Hierbei handelt es sich zumeist um Substanzen, deren Abgabe an die Umwelt unerwünscht ist. Eine dieser Substanzen stellt Stickoxid (NOₓ) dar, deren Anteil im Abgas gesetzlich festgelegte Grenzwerte nicht übersteigen darf. Auf Grund der Rahmenbedingungen, beispielsweise der Auslegung der Verbrennungskraftmaschinen im Hinblick auf günstige Verbrauche und ähnliches, ist die innermotorische Vermeidung der Stickoxidemission bei der Verminderung des Anteils der Stickoxide im Abgas nur begrenzt tauglich, so dass für die Einhaltung relativ niedriger Grenzwerte eine Abgasnachbehandlung erforderlich ist. Hierbei hat sich herausgestellt, dass eine selektive katalytische Reduktion (SCR, selective catalytic reduction) der Stickoxide vorteilhaft ist. Diese SCR-Methode benötigt ein Reduktionsmittel, welches stickstoffhaltig ist. Insbesondere hat sich der Einsatz von Ammoniak (NH₃) als Reduktionsmittel als eine mögliche Alternative herausgestellt. Auf Grund der chemischen Eigenschaften und der gesetzlichen Bestimmungen in vielen Staaten wird üblicherweise der Ammoniak nicht als reines Ammoniak vorgehalten, da dies insbesondere bei Kraftfahrzeugen oder anderen mobilen Anwendungen zu Problemen führen kann. Vielmehr werden statt einer Bevorratung der Reduktionsmittel selber oftmals Reduktionsmittelvorläufer gespeichert und mitgeführt. Unter einem Reduktionsmittelvorläufer wird insbesondere ein Stoff verstanden, welcher das Reduktionsmittel abspaltet oder chemisch in das Reduktionsmittel umgewandelt werden kann. Beispielsweise stellt für das Reduktionsmittel Ammoniak Harnstoff einen Reduktionsmittelvorläufer dar. Weitere mögliche Reduktionsmittelvorläufer für Ammoniak als Reduktionsmittel sind Ammoniumcarbamat, Isocyansäure oder Cyanursäure.

Die chemische Umwandlung des Reduktionsmittelvorläufers in das Reduktionsmittel, die Abspaltung des Reduktionsmittels aus dem Reduktionsmittelvorläufer sowie eine mögliche Aggregatszustaadsänderung des Reduktionsmittelvorläufers und/oder des Reduktionsmittels beruhen regelmäßig auf endothermen Vorgängen, die einen Energieeintrag benötigen. Dieser Energieeintrag führt regelmäßig zu einer Temperaturabsenkung des Abgases und/oder von Komponenten im Abgassystem. Jedoch ist bekannt, dass eine Temperaturänderung bei Ablauf einer chemischen Reaktion auch das Reaktionsgleichgewicht dieser Reaktion verschiebt In Abhängigkeit von der dann vorliegenden Lage des Reaktionsgleichgewichts können neben den eigentlich gewünschten Produkten der Reaktion Nebenprodukte entstehen, die unerwünscht sind.

Aus der EP 1 469 173 A1 ist ein Verfahren und eine Vorrichtung zur Steuerung der Temperatur eines Abgases bekannt, wobei die Temperatur des Abgases in einem für eine effiziente Umsetzung von Stickoxiden effizienten Temperaturbereich geregelt wird. Nachteilig ist jedoch, dass hierbei eine Temperaturabsenkung in Folge einer Umwandlung von Reduktionsmittel unberücksichtigt bleibt.

Von daher liegt der vorliegenden Erfindung die Aufgabe zu Grunde, ein Verfahren zur. Reduktion von Stickoxiden im Abgas einer Verbrennungskraftmaschine vorzuschlagen, bei der die Bildung von unerwünschten Nebenprodukten bei der Bereitstellung des Reduktionsmittels wirksam vermieden werden, sowie ein entsprechendes Abgassystem vorzuschlagen.

Diese Aufgabe wird gelöst durch ein Verfahren mit den Merkmalen des Anspruchs 1, vorteilhafte Weiterbildungen sind Gegenstand der abhängigen Ansprüche.

Das erfindungsgemäße Verfahren zur selektiven katalytischen Reduktion von Stickoxiden im Abgas einer Verbrennungskraftmaschine, wobei im Abgassystem der Verbrennungskraftmaschine stromaufwärts eines SCR-Katalysators eine Reaktionsmittelzugabe zur Zugabe mindestens einer der folgenden Reaktionsmittel:
a) eines Reduktionsmittels und
b) eines Reduktionsmittelvorläufers
   und direkt stromabwärts der Reaktionsmittelzugabe eine vom Abgas zumindest umströmbare Struktur ausgebildet ist, umfasst zumindest die folgenden Schritte:
   1.1) Bestimmung eines Stickoxidanteils des Abgases;
   1.2) Bestimmung einer Temperatur der Struktur;
   1.3) Bestimmung einer für eine Reduktion des in Schritt 1.1) bestimmten Stickoxidanteils benötigten Menge an Reaktionsmittel;
   1.4) Bestimmung einer Temperatur der Struktur nach Zugabe der Menge an Reaktionsmittel;
   1.5) Vergleich der Temperatur der Struktur nach Zugabe der Menge an Reduktionsmittel mit einer vorgebbaren Zieltemperatur;
   1.6) Berechnen der Temperatur der Struktur nach mindestens einer der folgenden Maßnahmen, wenn die Temperatur kleiner als die Zieltemperatur ist:
      1.6a) Zugabe einer reduzierten Menge an Reaktionsmittel und
      1.6b) Erhöhung mindestens einer der folgenden Temperaturen:
         1.6b-1) der Temperatur der Struktur und
         1.6b.2) einer Abgastemperatur.
      bis die Temperatur der Struktur nach Zugabe der Menge an Reaktionsmittel größer oder gleich der Zieltemperatur ist; und
   1.7) Zugabe der Menge an Reaktionsmittel durch die Reaktionsmittelzugabe und gegebenenfalls Erhöhung der Temperatur gemäß Schritt 1.6b).

Unter direkt stromabwärts wird im Sinne der vorliegenden Erfindung verstanden, dass die Struktur die in Strömungsrichtung stromabwärts im Abgassystem nächstliegende Struktur hinter der Reaktionsmittelzugabe darstellt. Bei dem SCR-Katalysator handelt es sich insbesondere um eine durchströmbare Struktur wie beispielsweise einen Wabenkörper, welche mit einer entsprechenden Beschichtung versehen ist. Insbesondere kann es sich hier um ein Titandioxid (Anatas)-getragenes Vanadium/Wolframmischoxid und/oder metallausgetauschte Zeolithe, bevorzugt Eisenzeolithe, insbesondere vom Typ X, Y, ZSM-5 und/oder ZSM-11 handeln. Als Wabenkörper können insbesondere übliche keramische und/oder metallische Wabenkörper zum Einsatz kommen, die für ein Abgas zumindest beströmbare Hohlräume wie beispielsweise Kanäle aufweisen. Bevorzugt ist die Ausbildung des Wabenkörpers aus mindestens einer zumindest teilweise strukturierten metallischen Lage. Hierbei kann die metallische Lage Blechfolien und/oder poröse metallische Lagen umfassen. Der Wabenkörper wird bevorzugt durch Wickeln mindestens einer zumindest teilweise strukturierten metallischen Lage und gegebenenfalls mindestens einer im Wesentlichen glatten metallischen Lage oder durch Stapeln mindestens einer zumindest teilweise strukturierten und gegebenenfalls mindestens einer im Wesentlichen glatten Lage und Verwinden mindestens eines so gebildeten Stapels hergestellt.

Bevorzugt wird ein Verfahren, bei dem als Reaktionsmittel Ammoniak als Reduktionsmittel und/oder Harnstoff als Reduktionsmittelvorläufer zugegeben wird. Bevorzugt ist hierbei die Zugabe von Harnstoff als Feststoff und/oder in Form einer wässrigen Harnstofflösung.

Hierbei findet je nach Temperatur im SCR-Katalysator folgende Hauptreaktion stattfinden:

NO + NO₂ + 2 NH₃ -> 2 N₂ + H₂O

Hierbei wird Stickstoffmonoxid (NO) mit Stickstoffdioxid (NO₂) und Ammoniak (NH₃) zu molekularem Stickstoff (N₂) und Wasser (H₂O) umgesetzt. Bei der Bereitstellung des Reduktionsmittels Ammoniak aus einem Reduktionsmittelvorläufer (Harnstoff) erfolgt regelmäßig eine mehrstufige Reaktion, bei der oftmals eine Thermolyse und/oder Hydrolyse vorgenommen. Bei der Thermolyse wird Harnstoff ((NH₂)₂CO) thermisch zu Ammoniak und Isocyansäure (HCNO) umgesetzt.

Hieran anschließend erfolgt eine Hydrolyse, bei der die Isocyansäure mit Wasser zu Ammoniak und Kohlendioxid umgesetzt wird:

(NH₂)₂CO -> NH₃ + HCNO

HCNO + H₂O -> NH₃ + CO₂

Insbesondere die Hydrolyse und Thermolyse wird oftmals an einem Hydrolysekatalysator durchgeführt, welcher üblicherweise in und/oder auf einer Beschichtung eines Wabenkörpers aufgebracht ist. Je nach Temperatur dieses Hydrolysekatalysators kommt es neben den oben angegebenen gewünschten Hauptreaktionen auch zu Nebenreaktionen, die teilweise unerwünschte Reaktionsprodukte liefern. Bei dem oben angegebenen bevorzugten System, bei dem als Reduktionsmittel Ammoniak und als Reduktionsmittelvorläufer Harnstoff eingesetzt wird, kann es neben der oben angegebenen Bildung von Ammoniak auch zur Bildung von beispielsweise Biuret ((NH₂CO)₂NH) kommen. Biuret stellt ein zähflüssiges Produkt dar, welches bei Bildung auf dem Hydrolysekatalysator zur Verstopfung der Kanäle dieses Katalysators führen kann. Somit wird einerseits die erzielte Ammoniakausbeute verringert und andererseits kommt es zu einem Verkleben der Kanäle des Wabenkörpers. Biuret kann nur mit sehr großem Aufwand aus dem Wabenkörper entfernt werden, so dass in vorteilhafter Weise die Temperatur, bei welcher die Thermo- und/oder Hydrolyse von Harnstoff erfolgt, so gewählt werden sollte, dass kein Biuret entsteht, da ein Verkleben von Kanälen des Hydrolysekatalysators zu einem Ausfall dieses Katalysators und damit zu einer ungenügenden Umwandlung von Harnstoff in Ammoniak führen kann.

Grundsätzlich wird in Schritt 1.3) erfindungsgemäß eine stöchiometrische Umsetzung des Stickoxids mit dem Reduktionsmittel zu Grunde gelegt. Bei Zugabe des Reduktionsmittelvorläufers und/oder des Reduktionsmittels im Abgas kommt es wie oben geschildert zu einer Absenkung der Temperatur des Abgases und damit auch der vom Abgas um- oder durchströmten Bauteile. Dies ist in Bezug auf unerwünschte Nebenprodukte wie beispielsweise Biuret unkritisch, wenn die Temperatur des Abgases hoch genug ist. Liegt die Abgastemperatur jedoch im Bereich einer kritischen Temperatur, dann kann das Reaktionsgleichgewicht in Richtung der Erzeugung von unerwünschten Nebenprodukten verschoben werden. Die Zieltemperatur, mit der die Temperatur der Struktur gemäß Schritt 1.5) verglichen wird, ist daher so vorzugeben, dass bei der Zieltemperatur die Bildung der unerwünschten Nebenprodukte wie beispielsweise Biuret ein vorgebbares Maß nicht übersteigt. Bevorzugt ist die Zieltemperatur so vorgegeben, dass unerwünschte Nebenprodukte nur in geringem Maße gebildet werden.

Das erfindungsgemäße Verfahren berücksichtigt also die Temperaturerniedrigung des Abgases durch Zugabe des Reduktionsmittelvorläufers und/oder des Reduktionsmittels und leitet mögliche Gegenmaßnahmen ein. Eine dieser Gegenmaßnahmen kann gemäß Schritt 1.6a) darin bestehen, die zuzugebende Menge des Reduktionsmittels zu reduzieren. Dies führt dazu, dass zwar nicht sämtliche im Abgas vorhandene Stickoxide mehr umgesetzt werden, je nach Betriebszustand der Verbrennungskraftmaschine kann dies jedoch in Kauf genommen werden. Ein weiterer möglicher Schritt einer Gegenmaßnahme besteht in einer Erhöhung der Temperatur des Systems und zwar einerseits in einer Erhöhung der Temperatur der direkt stromabwärts der Reaktionsmittelzugabe liegenden Struktur und andererseits der Abgastemperatur. Da hier aktive Maßnahmen erforderlich sind, wie beispielsweise ein elektrisches Beheizen der Struktur oder ein Erhöhen der Abgastemperatur durch Veränderung des Betriebszustandes des Motors oder durch Einspritzung und Oxidation einer zusätzlichen Menge Kraftstoff entsteht hier ein grundsätzlich unerwünschter Nebeneffekt, der beispielsweise in einem erhöhten Kraftstoffverbrauch liegt. Das erfindungsgemäße Verfahren berücksichtigt die Möglichkeiten 1.6a) und 1.6b) in einem solchen Maße, dass bei einem möglichst geringen Kraftstoffmehrverbrauch eine möglichst hohe Umsetzung der im Abgas vorhandenen Stickoxide erfolgt ohne dass die Zieltemperatur unterschritten wird.

Grundsätzlich beruht das erfindungsgemäße beispielsweise darauf, dass auf Grund des Motormanagements zu jedem Zeitpunkt bekannt ist, welche Stickoxidanteile das Abgas beim Verlassen der Verbrennungskraftmaschine enthält. Bis zum Erreichen des stromabwärts im Abgassystem ausgebildeten SCR-Katalysators vergeht eine gewisse Zeit, die dazu genutzt werden kann, entsprechend die Menge an zuzugebendem Reaktionsmittel bestimmt werden, gegebenenfalls können die in Schritt 1.6) dargestellten Maßnahmen ergriffen werden. Insbesondere kann das erfindungsgemäße Verfahren auch mit einem NOₓ-Adsorber kombiniert werden, in dem überschüssige Stickoxidanteile reversibel gespeichert werden können. Eine spätere Regeneration des NOₓ-Adsorbers kann so geplant werden, dass es zu einer möglichst vollständigen Umsetzung der gespeicherten Stickoxide kommt.

Schritt 1.6b.1) ist so zu verstehen, dass die Temperatur der Struktur soweit erhöht wird, dass trotz der durch die Zugabe des Reaktionsmittels sinkenden Temperatur die Temperatur der Struktur sicher oberhalb der Zieltemperatur gehalten wird.

Gemäß einer vorteilhaften Weiterbildung des erfindungsgemäßen Verfahrens umfasst die Struktur einen Wabenkörper.

Hierbei kann es sich insbesondere um keramische Wabenkörper und/oder um metallische Wabenkörper handeln. Bevorzugt sind hierbei ebenfalls Wabenkörper, die Kanäle bilden, die von einem Fluid wie beispielsweise einem Abgas durchströmbar sind.

Besonders bevorzugt ist eine Weiterbildung des Verfahrens, bei dem die Struktur mindestens einen der folgenden Katalysatoren umfasst:
3.1) einen Hydrolysekatalysator und
3.2) einen SCR-Katalysator.

Insbesondere bei Einsatz einer wässrigen Harnstofflösung als Reduktionsmittelvorläufer ist das erfindungsgemäße Verfahren dann von Vorteil, wenn die Struktur einen Hydrolysekatalysator gemäß Variante 3.1) umfasst, da hier neben der für die chemische Reaktion nötige Energie noch die Verdampfungsenthalpie des Wassers aufgebracht werden muss, was zu einer weiter erniedrigten Temperatur nach Zugabe des Reaktionsmittels führt. Bei Einsatz von Harnstofflösung als Reduktionsmittelvorläufer liegt damit eine erhöhte Wahrscheinlichkeit vor, dass unerwünschte Nebenprodukte wie beispielsweise Biuret gebildet werden.

Gemäß einer weiteren vorteilhaften Ausgestaltung des erfindungsgemäßen Verfahrens umfasst Schritt 1.1) mindestens eine der folgenden Maßnahmen:
4.1) Messen des Stickoxidgehalts und
4.2) Bestimmung der Stickoxidemission aus den Motorkenndaten.

Insbesondere dann, wenn gemäß Schritt 4.2) die Stickoxidemission zumindest teilweise aus den Motorkenndaten gewonnen werden, kann in vorteilhafter Weise die Laufzeit des Abgases von der Verbrennungskraftmaschine bis zum SCR-Katalysator für die Durchführung der erfindungsgemäßen Schritte 1.1) bis 1.6) genutzt werden. Unter einem Motorkennfeld bzw. den Motorkenndaten wird insbesondere das Betriebskennfeld der Verbrennungskraftmaschine verstanden. Hierbei lässt sich aus den anliegenden und messbaren bzw. vorgegebenen Kenndaten des Motors wie beispielsweise der Last, Drehzahl, etc. der Stickoxidverbrauch berechnen. Gemäß Möglichkeit 4.1) kann der Stickoxidgehalt alternativ oder zusätzlich auch mit einem entsprechenden Sensor gemessen werden. Es können mehrere Sensoren ausgebildet sein, so dass unterschiedliche Messwerte an unterschiedlichen Punkten des Abgassystems vorliegen. Diese können mit den aus Möglichkeit 4.2) bestimmten Stickoxidemission aus Motorkenndaten abgeglichen werden. Insbesondere ist es auch möglich, ein rechnergestütztes Modell des Abgassystems zu entwerfen, an Hand dessen mittels gemessener Stützpunkte in Bezug auf insbesondere den Stickoxidgehalt, den Sauerstoffgehalt und die Temperatur des Abgases an mindestens einem Punkt des Abgassystems die entsprechenden Werte in anderen Bereichen des Abgassystems bestimmt werden kann.

Gemäß einer weiteren vorteilhaften Ausgestaltung des erfindungsgemäßen Verfahrens umfasst Schritt 1.2) mindestens eine der folgenden Maßnahmen:
5.1) Messen der Temperatur der Struktur und
5.2) Berechnen der Temperatur.

Auch hier ist es möglich, die Temperatur der Struktur zu berechnen, beispielsweise aus den Motorkenndaten und der bekannten spezifischen Auslegung des Abgassystems. Weiterhin kann die Temperatur der Struktur, die Temperatur eines anderen Bauteils im Abgassystem und/oder auch des Abgases selbst bestimmt und aus dieser die Temperatur bestimmt werden.

Gemäß einer weiteren vorteilhaften Ausgestaltung des erfindungsgemäßen Verfahrens beträgt die Zieltemperatur höchstens 180°C, bevorzugt zwischen 120°C und 170°C, insbesondere etwa 160°C.

Diese Temperaturen haben sich als besonders vorteilhaft zur Vermeidung der Bildung von Biuret aus Harnstoff erwiesen. Diese Zieltemperaturen gewährleisten insbesondere in besonders vorteilhafter Weise, dass ein Verkleben und Verschließen der Kanäle zumindest der Struktur in wirksamer Weise wesentlich verringert oder sogar im wesentlichen verhindert werden kann.

Gemäß einer weiteren vorteilhaften Ausgestaltung des erfindungsgemäßen Verfahrens wird Schritt 1.6) iterativ durchgeführt.

Insbesondere dann, wenn der Stickoxidgehalt des Abgases zumindest teilweise aus dem Motorkennfeld berechnet wird, kann in vorteilhafter Weise ein iterativer Ansatz bei Durchführung des Schrittes 1.6) gewählt werden, da hier im Regelfall bei einer Rechner gestützten Durchführung des Verfahrens und einem entsprechend schnellem Prozessor eine genügend große Zeitspanne zur Verfügung steht um iterativ die Maßnahme 1.6a) und 1.6b) und deren Wirkung auf die Temperatur der Struktur nach Zugabe der Menge an Reaktionsmittel bestimmt werden kann.

Je nach Gestaltung des iterativen Prozesses kann so eine sehr genaue Verfahrensführung in Bezug auf den Schritt 1.6) erreicht werden. Insbesondere kann bei relativ großen Iterationsschritten trotz des iterativen Vorgehens eine sehr schnelle Unterschreitung der Zieltemperatur nach Zugabe der Menge an Reaktionsmittel erreicht werden.

Gemäß einer weiteren vorteilhaften Ausgestaltung des erfindungsgemäßen Verfahrens wird Schritt 1.6) kontinuierlich durchgeführt.

Eine kontinuierliche Durchführung des Schrittes 1.6) hat den Vorteil, dass eine sehr schnelle Unterschreitung der Temperatur unterhalb der Zieltemperatur erreicht werden kann. Insbesondere dann, wenn relativ große Gradienten bei den Maßnahmen 1.6a) und 1.6b) verwendet werden, kann eine schnelle Prozessführung gewährleistet werden.

Gemäß einer weiteren vorteilhaften Ausgestaltung des erfindungsgemäßen Verfahrens umfasst die Durchführung der Temperaturerhöhung gemäß Schritt 1.6b.1) eine elektrische Aufheizung der Struktur.

Insbesondere kann die Struktur einen elektrisch beheizbaren Wabenkörper umfassen. Die elektrische Beheizung der Struktur hat den Vorteil, dass eine sehr schnelle Erhöhung der Temperatur der Struktur über die Zieltemperatur erreicht werden kann und so sehr wirkungsvoll die Bildung von unerwünschten Nebenprodukten wie beispielsweise Biuret verhindert werden kann. Die elektrische Aufheizung der Struktur ermöglicht eine sehr hohe Dynamik des Anpassungs- und Regelprozesses.

Gemäß einer weiteren vorteilhaften Ausgestaltung des erfindungsgemäßen Verfahrens umfasst die Durchführung der Temperaturerhöhung gemäß Schritt 1.6b.2) mindestens eine der folgenden Maßnahmen:
10.1) Änderung des Betriebspunktes der Verbrennungskraftmaschine;
10.2) elektrische Beheizung des Abgases vor der Struktur und
10.3) Einspritzung und Oxidation von Kohlenwasserstoffen.

Gemäß Schritt 10.1) kann durch eine relativ kleine Veränderung des Betriebspunktes der Verbrennungskraftmaschine unter Inkaufnahme eines gegebenenfalls gering erhöhten Kraftstoffverbrauchs eine Erhöhung der Abgastemperatur erreicht werden, mit der die durch die Zugabe des Reaktionsmittels entstehende Temperaturerniedrigung ausgeglichen werden kann. Gemäß Schritt 10.2) kann eine elektrische Beheizung des Abgases beispielsweise durch einen stromaufwärts der Struktur liegenden elektrisch beheizbaren Wabenkörper erfolgen. Gemäß Schritt 10.3) kann beispielsweise durch ein kurzfristigen fetten Betrieb der Verbrennungskraftmaschine und einen entsprechenden Oxidationskatalysator im Abgasstrang insbesondere stromaufwärts der Struktur eine Erhöhung des Abgases und damit eine Erhöhung der Temperatur der Struktur bewirkt werden.

Gemäß einer weiteren vorteilhaften Ausgestaltung des erfindungsgemäßen Verfahrens ist als Reaktionsmittel mindestens einer der folgenden Stoffe zugebbar:
11.1) Ammoniak und
11.2) Harnstoff.

So kann in vorteilhafter Weise insbesondere die Bildung von Biuret auf der Struktur verhindert werden.

Gemäß einer weiteren vorteilhaften Ausgestaltung des erfindungsgemäßen Verfahrens wird die Menge an Reaktionsmittel reduziert, wenn ein Reduktionsmittelgehalt im Abgasstrom nach dem SCR-Katalysator nachweisbar ist.

Ist stromabwärts des SCR-Katalysators ein Reduktionsmittelgehalt nachweisbar, so liegt Reduktionsmittel überstöchiometrisch vor. Um dies zu verhindern, kann die Menge des zuzugebenden Reduktionsmittels oder des Reduktionsmittelvorläufers erfindungsgemäß gesenkt werden. Insbesondere kann stromabwärts des SCR-Katalysators ein Oxidationskatalysator ausgebildet sein, mittels dem eine Oxidation von durch den SCR-Katalysator durchbrechendem Reduktionsmittel erfolgen kann.

Nachfolgend wird ein Abgassystem für eine Verbrennungskraftmaschine beschrieben, umfassend einen SCR-Katalysator, eine Reaktionsmittelzugabe zur Zugabe mindestens eines der folgenden Reaktionsmittel:
a) eines Reduktionsmittels und
b) eines Reduktionsmittelvorläufers
   und stromabwärts der Reaktionsmittelzugabe eine vom Abgas zumindest umströmbare Struktur, wobei Steuerungsmittel zur Zugabe des Reaktionsmittels bei Regelung der Menge an zugegebenem Reaktionsmittel in Abhängigkeit von mindestens einer der folgenden Größen:
   13.1) der Abgastemperatur,
   13.2) der Temperatur der Struktur und
   13.3) dem Stickoxidanteil des Abgases
   unter Berücksichtigung der Änderung mindestens einer der Größen 13.1) und 13.2) durch die Zugabe der Menge an Reaktionsmittel.

Die für das erfindungsgemäße Verfahren offenbarten Details und Weiterbildungen sind auf das Abgassystem übertrag- und anwendbar. Insbesondere kann das Abgassystem zur Durchführung des erfindungsgemäßen Verfahrens eingesetzt werden.

Im Folgenden wird die Erfindung an Hand der beigefügten Figur beschrieben, ohne dass die Erfindung auf das dort gezeigte Ausführungsbeispiele und die offenbarten Vorteile beschränkt wäre.

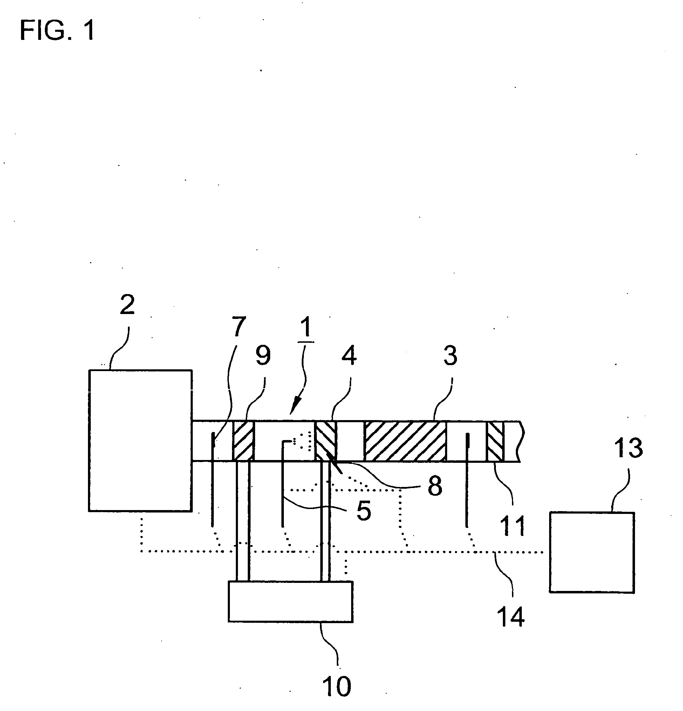

Die einzige beigefügte Fig. 1 zeigt ein erfindungsgemäßes Abgassystem 1 einer Verbrennungskraftmaschine 2. Das Abgassystem 1 ist schematisch gezeigt. Das Abgassystem 1 umfasst einen SCR-Katalysator 3. Vor dem SCR-Katalysator 3 ist ein Hydrolysekatalysator 4 ausgebildet. Stromaufwärts des Hydrolysekatalysators 4 ist eine Reaktionsmittelzugabe 5 ausgebildet, mittels der ein Reduktionsmittel und/oder ein Reduktionsmittelvorläufer in das Abgassystem 1 eingeleitet werden kann. Hierbei wird besonders bevorzugt mittels der Reaktionsmittelzugabe 5 Harnstoff als Feststoff und/oder in Form einer wässrigen Harnstofflösung zugegeben. Der Hydrolysekatalysator 4 bildet hierbei die direkt stromabwärts der Reaktionsmittelzugabe 5 ausgebildete vom Abgas zumindest umströmbare Struktur.

Im Betrieb wird der Stickoxidgehalt im Abgas der Verbrennungskraftmaschine 2 bestimmt. Dies kann einerseits über das Betriebskennfeld der Verbrennungskraftmaschine 2 erfolgen, andererseits ist es möglich, den Stickoxidgehalt beispielsweise mittels eines ersten Messfühlers 7 bestimmt werden. An Hand dieses so bestimmten Stickoxidgehalts wird gemäß Schritt 1.3) die für die Reduktion des bestimmten Stickoxidanteils benötigte Menge an Reaktionsmittel bestimmt. Das Reaktionsmittel umfasst dabei ein Reduktionsmittel und/oder einen Reduktionsmittelvorläufer. Weiterhin wird die Temperatur des Hydrolysekatalysators 4 bestimmt, beispielsweise über einen zweiten Messfühler 8. Alternativ oder zusätzlich ist es möglich, die Temperatur der für ein Fluid zumindest umströmbaren Struktur also des Hydrolysekatalysators 4 aus den Betriebsdaten der Verbrennungskraftmaschine 2 unter Berücksichtigung der bekannten Auslegung des Abgassystems 1 zu bestimmen. An Hand der bestimmten Menge an Reaktionsmittel wird die Temperatur der Struktur nach Zugabe dieser Menge an Reaktionsmittel bestimmt. Diese Temperatur der Struktur nach Zugabe wird mit einer vorgebbaren Zieltemperatur verglichen. Liegt die Temperatur der Struktur nach Zugabe der Menge an Reaktionsmittel unter der Zieltemperatur, so wird die Temperatur der Struktur gemäß Schritt 1.6) nach mindestens einer der folgenden Maßnahmen berechnet.
1.6a) Zugabe einer reduzierten Menge an Reaktionsmittel und
1.6b) Erhöhung mindestens einer der folgenden Temperaturen:
   1.6b.1) der Temperatur der Struktur und
   1.6b.2) einer Abgastemperatur.

Hierbei kann die Menge in Schritt 1.6a) kontinuierlich oder iterativ bzw. diskontinuierlich reduziert werden, gleiches gilt für die zu erhöhenden Temperaturen. Liegt die Temperatur der Struktur nach Zugabe der Menge an Reaktionsmitteln unter Berücksichtigung der Maßnahme 1.6a), 1.6b) oberhalb der Zieltemperatur oder entspricht sie dieser, so wird die Menge an Reaktionsmittel zugegeben und gegebenenfalls wird die Temperatur entsprechend erhöht. Dies kann beispielsweise durch Beheizen des Hydrolysekatalysators 4 oder eines stromaufwärts des Hydrolysekatalysators 4 liegenden Wabenkörpers 9 erfolgen. Die elektrische Beheizung kann beispielsweise durch elektrische Beheizungsmittel 10 erfolgen, mit denen der Wabenkörper 9 und/oder der Hydrolysekatalysator 4 verbunden ist. Stromabwärts des SCR-Katalysators 3 kann ein Oxidationskatalysator 11 ausgebildet sein, um eventuell durch den SCR-Katalysator durchbrechendes Reduktionsmittel umzusetzen und so eine Abgabe des Reduktionsmittels an die Umgebung zu verhindern. Zur Überwachung, ob ein Reduktionsmitteldurchbruch vorliegt, ist stromabwärts des SCR-Katalysators 3 ein dritter Messfühler 12 ausgebildet, mit dem insbesondere die Reduktionsmittelkonzentration im Abgas bestimmt werden kann. Zeigt der dritte Messfühler 12 eine nennenswerte Reduktionsmittelkonzentration an, dann wird die Menge an zugegebenem Reaktionsmittel reduziert. Zur Durchführung des Verfahrens sind Steuerungsmittel 13 ausgebildet, die über Signalleitungen 14, die hier nur angedeutet sind, mit den Messfühlern 7, 8, 12, den elektrischen Beheizungsmitteln 10, der Verbrennungskraftmaschine 2 und der Reaktionsmittelzugabe 5 verbunden sind. Die Signalleitungen 14 bilden in vorliegendem Ausführungsbeispiel ein Bussystem mit adressierbarem Datenbus. Insbesondere kann in den Steuerungsmitteln 13 das erfindungsgemäße Verfahren durchgeführt werden. Die Steuerungsmittel 13 können beispielsweise in einer Motorsteuerung für die Verbrennungskraftmaschine integriert sein.

Das erfindungsgemäße Verfahren sowie das erfindungsgemäße Abgassystem 1 ermöglichen in vorteilhafter Weise die selektive katalytische Reduktion von Stickoxiden im Abgas einer Verbrennungskraftmaschine 2, bei der die Bildung von unerwünschten Nebenprodukten wie beispielsweise Biuret bei Einsatz von Harnstoff als Reduktionsmittelvorläufer möglichst vermieden wird. Dies führt in vorteilhafter Weise zu einer Verlängerung der Lebensdauer des Abgassystems 1.

### Bezugszeichenliste

- 1: Abgassystem
- 2: Verbrennungskraftmaschine
- 3: SCR-Katalysator
- 4: Hydrolysekatalysator
- 5: Reaktionsmittelzugabe
- 7: erster Messfühler
- 8: zweiter Messfühler
- 9: Wabenkörper
- 10: elektrisches Beheizungsmittel
- 11: Oxidationskatalysator
- 12: dritter Messfühler
- 13: Steuerungsmittel
- 14: Signalleitung

## Patentansprüche

1. Verfahren zur selektiven katalytischen Reduktion von Stickoxiden (NOₓ) im Abgas einer Verbrennungskraftmaschine (2), wobei im Abgassystem (1) der Verbrennungskraftmaschine (2) stromaufwärts eines SCR-Katalysators (3) eine Reaktionsmittelzugabe (5) zur Zugabe mindestens eines der folgenden Reaktionsmittel:
a) eines Reduktionsmittels und
b) eines Reduktionsmittelvorläufers
und direkt stromabwärts der Reaktionsmittelzugabe (5) eine vom Abgas zumindest umströmbare Struktur (4) ausgebildet ist, zumindest umfassend die folgenden Schritte:
1.1) Bestimmung eines Stickoxidanteils des Abgases;
1.2) Bestimmung einer Temperatur der Struktur (4);
1.3) Bestimmung einer für eine Reduktion des in Schritt 1.1) bestimmten Stickoxidanteils benötigten Menge an Reaktionsmittel;
1.4) Bestimmung einer Temperatur der Struktur (4) nach Zugabe der Menge an Reaktionsmittel;
1.5) Vergleich der Temperatur der Struktur (4) nach Zugabe der Menge an Reaktionsmittel mit einer vorgebbaren Zieltemperatur;
1.6) Berechnen der Temperatur der Struktur (4) nach mindestens einer der folgenden Maßnahmen, wenn die Temperatur kleiner als die Zieltemperatur ist:
1.6a) Zugabe einer reduzierten Menge an Reaktionsmittel und
1.6b) Erhöhung mindestens einer der folgenden Temperaturen:
1.6b.1) der Temperatur der Struktur (4) und
1.6b.2) einer Abgastemperatur;
bis die Temperatur der Struktur (4) nach Zugabe der Menge an Reaktionsmittel größer oder gleich der Zieltemperatur ist; und
1.7) Zugabe der Menge an Reaktionsmittel durch die Reaktionsmittelzugabe und gegebenenfalls Erhöhung der Temperatur gemäß Schritt 1.6b).

2. Verfahren nach Anspruch 1, bei dem die Struktur (4) einen Wabenkörper umfasst.

3. Verfahren nach Anspruch 1 oder 2, bei dem die Struktur (4) mindestens einen der folgenden Katalysatoren umfasst:
3.1) einen Hydrolysekatalysator (4) und
3.2) einen SCR-Katalysator (3).

4. Verfahren nach einem der vorhergehenden Ansprüche, bei dem Schritt 1.1) mindestens eine der folgenden Maßnahmen umfasst:
4.1) Messen des Stickoxidgehalts und
4.2) Bestimmung der Stickoxidemissionen aus den Motorkenndaten.

5. Verfahren nach einem der vorhergehenden Ansprüche, bei dem Schritt 1.2) mindestens eine der folgenden Maßnahmen umfasst:
5.1) Messen der Temperatur der Struktur (4) und
5.2) Berechnen der Temperatur.

6. Verfahren nach einem der vorhergehenden Ansprüche, bei dem die Zieltemperatur höchstens 180°C, bevorzugt 120 bis 170°C, insbesondere etwa 160°C beträgt.

7. Verfahren nach einem der vorhergehenden Ansprüche, bei dem Schritt 1.6) iterativ durchgeführt wird.

8. Verfahren nach einem der Ansprüche 1 bis 6, bei dem Schritt 1.6) kontinuierlich durchgeführt wird.

9. Verfahren nach einem der vorhergehenden Ansprüche, bei dem die Durchführung der Temperaturerhöhung gemäß Schritt 1.6b.1) eine elektrische Aufheizung der Struktur (4) umfasst.

10. Verfahren nach einem der vorhergehenden Ansprüche, bei dem die Durchführung der Temperaturerhöhung gemäß Schritt 1.6b.2) mindestens eine der folgenden Maßnahmen umfasst:
10.1) Änderung des Betriebspunktes der Verbrennungskraftmaschine (2);
10.2) elektrische Beheizung des Abgases vor der Struktur (4) und
10.3) Einspritzung und Oxidation von Kohlenwasserstoffen.

11. Verfahren nach einem der vorhergehenden Ansprüche, bei dem als Reaktionsmittel mindestens einer der folgenden Stoffe zugebbar ist:
11.1) Ammoniak und
11.2) Harnstoff.

12. Verfahren nach einem der vorhergehenden Ansprüche, bei dem die Menge an Reaktionsmittel reduziert wird, wenn ein Reduktionsmittelgehalt im Abgasstrom nach dem SCR-Katalysator (3) nachweisbar ist.

## Claims

1. A method for the selective catalytic reduction of nitrogen oxides (NOₓ) in the exhaust gas from an internal combustion engine (2), wherein in the exhaust system (1) of the internal combustion engine (2) upstream of an SCR catalytic converter (3) a reagent addition point (5) is being formed for adding at least one of the following reagents:
a) a reducing agent, and
b) a reducing agent precursor
and immediately downstream of the reagent addition point (5) a structure (4) which the exhaust gas can at least flow around is being formed, the method at least comprising the following steps:
1.1) determining a nitrogen oxide content of the exhaust gas;
1.2) determining a temperature of the structure (4);
1.3) determining a quantity of reagent required for reduction of the nitrogen oxide content determined in step 1.1);
1.4) determining a temperature of the structure (4) after addition of the quantity of reagent;
1.5) comparing the temperature of the structure (4) after addition of the quantity of reagent with a predeterminable target temperature;
1.6) calculating the temperature of the structure (4) using at least one of the following measures if the temperature is lower than the target temperature;
1.6a) adding a reduced quantity of reagent and
1.6b) increasing at least one of the following temperatures:
1.6b.1) the temperature of the structure (4) and
1.6b.2) an exhaust gas temperature;
until the temperature of the structure (4), after addition of the quantity of reagent, is greater than or equal to the target temperature; and
1.7) adding the quantity of reagent through the reagent addition point and if appropriate increasing the temperature as described in step 1.6b).

2. The method as claimed in claim 1, in which the structure (4) comprises a honeycomb body.

3. The method as claimed in claim 1 or 2, in which the structure (4) comprises at least one of the following catalytic converters:
3.1) a hydrolysis catalytic converter (4) and
3.2) an SCR catalytic converter (3).

4. The method as claimed in one of the preceding claims, in which step 1.1) comprises at least one of the following measures:
4.1) measuring the nitrogen oxide content, and
4.2) determining the nitrogen oxide emissions from the engine characteristic data.

5. The method as claimed in one of the preceding claims, in which step 1.2) comprises at least one of the following measures:
5.1) measuring the temperature of the structure (4), and
5.2) calculating the temperature.

6. The method as claimed in one of the preceding claims, in which the target temperature is at most 180°C, preferably 120 to 170°C, in particular approximately 160°C.

7. The method as claimed in one of the preceding claims, in which step 1.6) is carried out iteratively.

8. The method as claimed in one of claims 1 to 6, in which step 1.6) is carried out continuously.

9. The method as claimed in one of the preceding claims, in which the execution of the increase in temperature in accordance with step 1.6b.1) comprises electrical heating of the structure (4).

10. The method as claimed in one of the preceding claims, in which the execution of the increase in temperature in accordance with step 1.6b.2) comprises at least one of the following measures:
10.1) changing the operating point of the internal combustion engine (2);
10.2) electrically heating the exhaust gas upstream of the structure (4), and
10.3) injecting and oxidizing hydrocarbons.

11. The method as claimed in one of the preceding claims, in which at least one of the following substances can be added as reagent:
11.1) ammonia and
11.2) urea.

12. The method as claimed in one of the preceding claims, in which the quantity of reagent is reduced if a reducing agent content can be detected in the exhaust gas stream downstream of the SCR catalytic converter (3).

## Revendications

1. Procédé de réduction sélective catalytique d'oxydes d'azote (NOₓ) dans le gaz d'échappement (1) d'un moteur à combustion interne (2), dans le cas duquel dans le système de gaz d'échappement (1) du moteur à combustion interne (2) en amont d'un convertisseur catalytique un ajout d'addition d'agent réactif (5) est formé pour ajouter au moins un des agents réactifs suivants:
a) un agent réducteur et
b) un précurseur d'agent réducteur
et directement en aval de l'ajout de l'agent réactif (5) une structure (4) étant réalisée pouvant au moins être affluée par le gaz d'échappement, le procédé comprenant au moins les étapes suivantes:
1.1) déterminer la teneur en oxyde d'azote du gaz d'échappement;
1.2) déterminer une température de la structure (4);
1.3) déterminer une quantité de l'agent réactif nécessaire pour une réduction de la part d'oxyde d'azote déterminée dans l'étape 1.1);
1.4) déterminer une température de la structure (4) après avoir ajouté la quantité d'agent réactif;
1.5) comparer la température de la structure (4), après avoir ajouté la quantité d'agent réactif, avec une température à atteindre pouvant être prescrite;
1.6) calculer la température de la structure (4) en utilisant au moins une des mesures suivantes, lorsque la température est plus basse que la température à atteindre:
1.6a) ajouter une quantité réduite d'agent réactif et
1.6b) augmenter au moins une des températures suivantes:
1.6b.1) la température de la structure (4) et
1.6b.2) une température de gaz d'échappement; et
1.7) ajouter la quantité d'agent réactif par l'ajout de l'agent réactif et le cas échéant, augmenter la température selon l'étape 1.6b.

2. Procédé selon la revendication 1, dans le cas duquel la structure (4) comprend un corps en nids d'abeilles.

3. Procédé selon la revendication 1 ou 2, dans le cas duquel la structure (4) comprend au moins un des convertisseurs catalytiques suivants:
3.1) un convertisseur catalytique d'hydrolyse (4)
3.2) un convertisseur catalytique SCR: (Réduction Sélective catalytique).

4. Procédé selon l'une des revendications précédentes, dans le cas duquel l'étape 1.1 comprend au moins une des mesures suivantes:
4.1) mesurer la teneur en oxyde d'azote et
4.2) déterminer les émissions d'oxyde d'azote à partir des données caractéristiques du moteur.

5. Procédé selon l'une des revendications précédentes, dans le cas duquel l'étape 1.2 comprend au moins une des mesures suivantes:
5.1) mesurer la température de la structure (4) et
5.2) calculer la température.

6. Procédé selon l'une des revendications précédentes, dans le cas duquel la température à atteindre comporte au maximum 180°C, de préférence 120 à 170°C, en particulier environ 160°C.

7. Procédé selon l'une des revendications précédentes, dans le cas duquel l'étape 1.6) est effectuée de manière itérative.

8. Procédé selon l'une des revendications 1 à 6, dans le cas duquel l'étape 1.6) est effectuée de manière continue.

9. Procédé selon l'une des revendications précédentes, dans le cas duquel l'exécution de l'augmentation de la température selon l'étape 1.6b.1) comprend chauffer de manière électrique la structure (4).

10. Procédé selon l'une des revendications précédentes, dans le cas duquel effectuer l'augmentation de la température selon l'étape 1.6b.2) comprend au moins une des mesures suivantes:
10.1) modifier le point de fonctionnement de la machine à combustion interne (2);
10.2) chauffer de manière électrique le gaz d'échappement en amont de la structure (4) et
10.3) injecter et oxyder des hydrocarbures.

11. Procédé selon l'une des revendications précédentes, dans le cas duquel on peut ajouter comme agent réactif au moins un des matériaux suivants:
11.1 de l'ammoniaque et
11.2 de l'urée.

12. Procédé selon l'une des revendications précédentes, dans le cas duquel la quantité d'agent réactif est réduite, lorsqu'une teneur en agent de réduction peut être détectée dans le flux de gaz d'échappement en aval du convertisseur catalytique SCR (3).
